# EUROPEAN PATENT SPECIFICATION

(11) **EP 0 786 940 B1**
(45) Date of publication and mention of the grant of the patent: **11.04.2001**
(21) Application number: 95935556.1
(22) Date of filing: 18.10.1995
(51) Int. Cl.: A23C 1/04, A23C 1/05, B01D 1/18

(54) **A METHOD AND APPARATUS FOR SPRAY-DRYING**
VERFAHREN UND VORRICHTUNG ZUM SPRÜHTROCKNEN
PROCEDE ET APPAREIL DE SECHAGE PAR PULVERISATION

(30) Priority: 18.10.1994 IE 940830
(43) Date of publication of application: 06.08.1997
(73) Proprietor: WATERFORD CREAMERY LIMITED, Dungarvan, County Waterford (IE)
(72) Inventor: CONNOLLY, Michael, Killeshandra County Cavan (IE); NASH, Barry, Killeshandra County Cavan (IE)
(74) Representative: Schütte, Gearoid
(86) International application number: IE9500054
(87) International publication number: WO9611580

(56) References cited:
- EP-A- 0 097 484
- EP-A- 0 334 982
- WO-A-90/14143
- VOEDINGSMIDDELENTECHNOLOGIE, vol. 21, no. 21, 1988 pages 21-24, P. VAN MIL ET AL. 'Eigenschappen van enkele zuivelprodukten gedroogd in een meerfasendroger'
- DAIRY INDUSTRIES INTERNATIONAL, vol. 52, no. 5, 1987 pages 31-34, ANON. 'Specialist milk powders from Maelor Creamery'
- NEW ZEALAND JOURNAL OF DAIRY SCIENCE AND TECHNOLOGY, vol. 7, no. 1, 1972 pages 21-22, A. BALDWIN ET AL. 'Instant milk powder'

## Description

The invention relates to a method and apparatus for drying, in particular to a method for producing skim milk powder, and to a spray dryer, particularly for use in a method for producing milk powder.

It is well known to add various additives to milk powder during production. There are, however, considerable difficulties in adding such additional materials in that it is very difficult to accurately add additional materials to achieve a desired final product. Very often excess additional material must be added which is lost in the process.

This invention is directed towards providing an improved method and apparatus for adding additional materials, particularly to milk powder.

According to one aspect, the invention provides a method for producing milk powder comprising the steps of:-
atomising a milk concentrate; and
drying the atomised milk concentrate in a dryer having an internal fluidised bed;
characterised in that the method includes the step of:
spraying additional liquid material from at least two spaced-apart nozzles along a single extending feedline onto the internal fluidised bed of milk powder, said spaced-apart nozzles placed from a height of at least 100mm above the top of the bed.

In one embodiment of the invention, the additional liquid material is sprayed onto the internal fluidised bed from a height of approximately 200 mm above the top of the bed.

In a preferred arrangement, the additional liquid is sprayed onto the bed at a height of at least 500 mm, preferably approximately 600 mm above the floor of the bed.

In a particularly preferred embodiment of the invention, the additional material is sprayed onto the bed from at least two spaced-apart nozzles. The nozzles may be radially and/or circumferentially spaced-apart.

In a particularly preferred arrangement, the additional liquid material is sprayed onto the bed from four nozzles which are equi-spaced circumferentially over the internal fluidised bed. Alternatively, the nozzles may be equi-spaced radially over the bed.

In one embodiment of the invention, the same additional liquid material is sprayed from each nozzle.

In another embodiment of the invention, different liquid materials are sprayed from different nozzles.

In a preferred embodiment of the invention, the additional liquid material is sprayed onto the fluidised bed at a weight % of less than 5% of the material of the internal fluidised bed.

The additional material may be of water based liquid, or an oil based liquid which may contain additives, milk based liquid which may contain additives or any suitable material including water or milk based sugar solutions or any combination of these. The oil based liquid may be lecithin which is preferably sprayed on at a rate of less than 1% by weight. The additional material may be a heat labile material such as vitamins. The additional material may be an agglomerating agent to improve the agglomeration of the powder.

The method may be used to produce any suitable milk powder including skim milk powder and fat filled milk powder.

In another aspect, the invention provides a spray dryer having an internal fluidised bed characterised in that the dryer includes means for spraying additional liquid material from at least two spaced apart nozzles along a single extending feedline onto the internal fluidised bed of powder material.

Preferably, there at least two and typically four nozzles which are substantially equi-spaced apart over the internal fluidised bed of the dryer. The nozzles may be radially and/or circumferentially spaced-apart

In one arrangement, the nozzles are at the same height with respect to the floor of the bed.

In another arrangement, the nozzles are at different heights with respect to the floor of the bed.

In a preferred embodiment of the invention, the or each nozzle is located at the height of at least 500 mm, and most preferably approximately 600 mm above the floor of the bed.

The invention will be more clearly understood from the following description thereof, given by way of example only, with reference to the accompanying drawings, in which:-
Fig. 1 is a schematic view of the lower end of a spray dryer according to the invention;
Fig. 2 is a plan view in the direction of the arrow A in Fig. 1;
Fig. 3 is a schematic view of the lower end of another spray dryer according to the invention; and
Fig. 4 is a plan view in the direction of the arrow B in Fig. 3.

Referring to the drawings, there is illustrated portion of a spray dryer according to the invention, indicated generally by the reference numeral 1. The spray dryer 1 has an internal fluidised bed 2 for powder material, particularly milk powder. Powder exits the dryer 1 over a weir 3 to an outlet line 4. Air is drawn through the dryer along an internal lower duct 5 located substantially centrally with respect to the internal fluidised bed 2. The dryer has a floor 6 which is typically about 4 meters in diameter and the air duct 5 typically is about 1.5 meters in diameter.

Means for spraying additional liquid material onto the internal fluidised bed 2 of powder material in this case comprises at least one, preferably at least two and in this case, most preferably four spray nozzles 10 which in this case are equi-spaced circumferentially over the internal fluidised bed 2. In this case, each of the nozzles 10 is located at the same height h above the floor 6 of the bed 2. The height h is preferably at least 500 mm and in this case, approximately 600 mm. This corresponds to a height h₁ above the top of the bed 2 of at least 100 mm, and preferably approximately 200 mm.

The nozzles 10 may be used to spray any suitable additional liquid material onto the internal fluidised bed 2. For example, the nozzles may be used to spray additional liquid material onto the fluidised bed of milk powder at a weight percentage of less than 5% of the material of the internal fluidised bed. The additional liquid material may be of water based liquid, or an oil based liquid which may contain additives, milk based liquid which may contain additives or any suitable material including water or milk based sugar solutions or any combination of these. The oil based liquid may be lecithin. The additional material may be a heat labile material such as vitamins. The additional material may be an agglomerating agent to improve the agglomeration of the powder. In the case of lecithin, the lecithin may be sprayed onto the milk powder at a weight percentage of less than 1%.

The spray nozzle arrangement may be configured to spray with or without air entrainment.

The method for producing milk powder according to the invention involves atomising the milk concentrate and drying the atomised milk concentrate in the dryer before spraying one or a number of different additional liquid materials onto the internal fluidised bed of milk powder. The milk powder may be a skim milk powder or a fat filled milk powder.

The principal advantage of the invention is in providing an integrated system for producing milk powder with any desired coating. The milk powder is sprayed with the additional material in situ in the fluidised bed dryer.

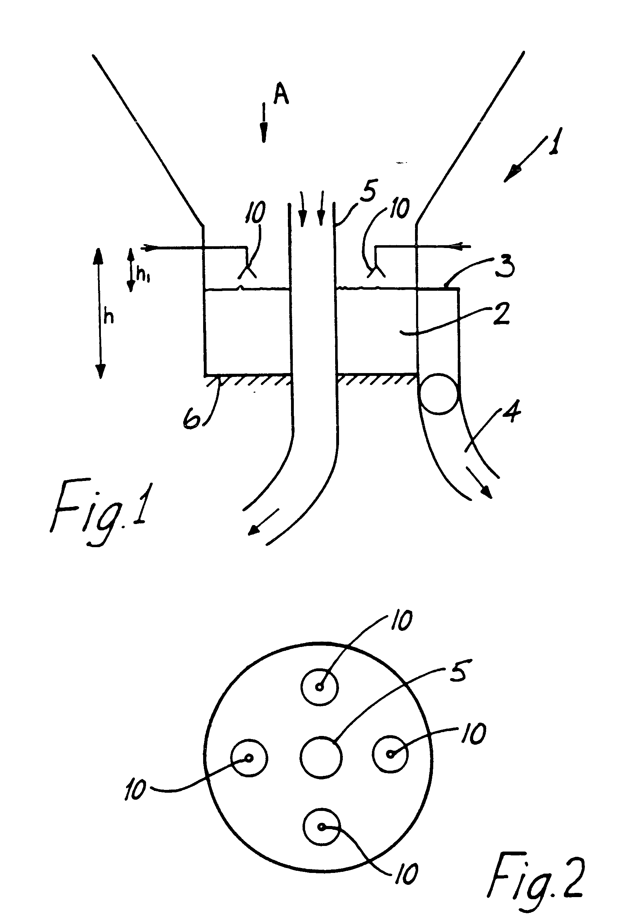

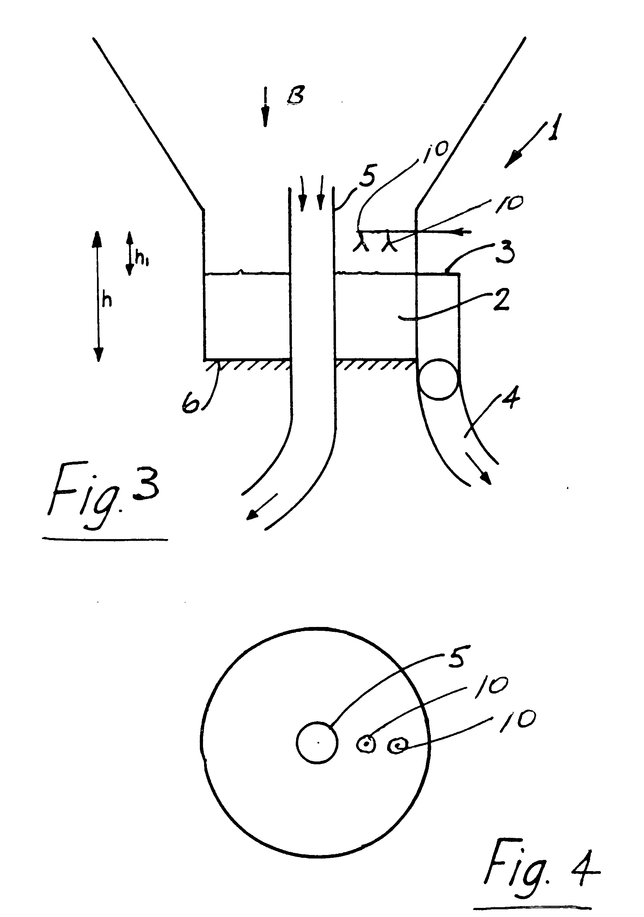

It will be appreciated that the spray nozzles may be arranged in any desired configuration. For example, to take account of the movement of the fluidised bed in use, one, two or more spray heads may be arranged along a single radially extending feed line. One such arrangement is illustrated in Figs. 3 and 4. Figs. 3 and 4 are similar to Figs. 1 and 2 and like parts are identified by the same reference numerals. In this case, there are two spray heads 10 which are equi-spaced in a radial direction.

It will also be appreciated that the operation of the spray nozzles may be controlled to achieve any desired result. The spray may be matched to the fluidised bed. Different nozzles may be supplied with different additional materials, the nozzles being activated, as required.

Many variations on the specific embodiments of the invention described will be readily apparent and accordingly the invention is not limited to the embodiments hereinbefore described which may be varied in both construction and detail.

## Claims

1. A method for producing milk powder comprising the steps of:-
atomising a milk concentrate; and
drying the atomised milk concentrate in a dryer (1) having an internal fluidised bed;
characterised in that the method includes the step of:
spraying additional liquid material from at least two spaced-apart nozzles along a single extending feedline onto the internal fluidised bed (2) of milk powder, said spaced-apart nozzles placed from a height of at least 100mm above the top of the bed.

2. A method as claimed in claim 1 wherein the additional liquid material is sprayed onto the internal fluidised bed (2) from a height of approximately 200 mm above the top of the bed (2).

3. A method as claimed in any preceding claim wherein the additional liquid is sprayed onto the bed (2) at a height of at least 500 mm and preferably approximately 600 mm above the floor of the bed (2).

4. A method as claimed in any preceding claim wherein the nozzles (10) are radially and/or circumferentially spaced-apart.

5. A method as claimed in claim 5 wherein the additional liquid material is sprayed onto the bed (2) from four nozzles (10) which are equi-spaced circumferentially over the internal fluidised bed (2).

6. A method as claimed in claim 4 wherein the additional liquid material is sprayed onto the bed (2) from at least two nozzles (10) which are equi-spaced radially over the bed.

7. A method as claimed in any of claims 4 to 6 wherein the same or different additional liquid material is sprayed from each or different nozzle (10).

8. A method as claimed in any preceding claim wherein the additional liquid material is sprayed onto the fluidised bed at a weight of less than 5% of the material of the internal fluidised bed.

9. A method as claimed in any preceding claim wherein the additional material is a water-based liquid containing additives and\or an oil-based liquid which may optionally contain additives.

10. A method as claimed in any preceding claim wherein the additional liquid material includes lecithin which is preferably sprayed onto the fluidised bed (2) at a weight % of less than 1% of the material of the internal fluidised bed (2).

11. A method as claimed in any preceding claim wherein the additional liquid material comprises vitamins.

12. A spray dryer (1) having an internal fluidised bed (2) characterised in that the dryer (1) includes extending means (10) for spraying additional liquid material from at least two spaced-apart nozzles along a single extending feedline onto the internal fluidised bed of powder material.

13. A spray dryer as claimed in claim 12 wherein the nozzles (10) are radially and\or circumferentially spaced-apart.

14. A spray dryer as claimed in claims 12 or 13 wherein there are four nozzles (10) which are substantially equi-spaced-apart over the internal fluidised bed (2) of the dryer (1).

15. A spray dryer as claimed in any of claims 12 to 14 wherein the nozzles are at the same height with respect to the floor of the bed.

16. A spray dryer as claimed in any of claims 12 to 15 wherein the nozzles are at different heights with respect to the floor of the bed.

17. A spray dryer as claimed in any of claims 12 to 16 wherein each nozzle is located at a height of at least 500 mm and preferably approximately 600 mm above the floor of the bed.

## Patentansprüche

1. Verfahren zum Herstellen von Milchpulver, das die Schritte umfaßt:
ein Milchkonzentrat zu pulverisieren; und
das pulverisierte Milchkonzentrat in einem Trockner (1) mit einem inneren Fließbett zu trocknen;
dadurch gekennzeichnet, daß das Verfahren den Schritt umfaßt:
zusätzliches flüssiges Material aus wenigstens zwei beabstandeten Düsen entlang einer einzigen verlaufenden Speiseleitung auf das innere Fließbett (2) von Milchpulver zu sprühen, wobei die genannten beabstandeten Düsen von einer Höhe von wenigstens 100 mm über dem oberen Teil des Betts angeordnet sind.

2. Verfahren nach Anspruch 1, bei dem das zusätzliche flüssige Material von einer Höhe von ungefähr 200 mm über dem oberen Teil des Betts (2) auf das innere Fließbett (2) gesprüht wird.

3. Verfahren nach einem vorhergehenden Anspruch, bei dem die zusätzliche Flüssigkeit bei einer Höhe von wenigstens 500 mm und vorzugsweise ungefähr 600 mm über dem Boden des Betts (2) auf das Bett (2) gesprüht wird.

4. Verfahren nach einem vorhergehenden Anspruch, bei dem die Düsen (10) radial und/oder am Umfang beabstandet sind.

5. Verfahren nach Anspruch 5, bei dem das zusätzliche flüssige Material aus vier gleichmäßig am Umfang über dem inneren Fließbett (2) beabstandeten Düsen (10) auf das Bett (2) gesprüht wird.

6. Verfahren nach Anspruch 4, bei dem das zusätzliche flüssige Material aus wenigstens zwei gleichmäßig radial über dem Bett beabstandeten Düsen (10) auf das Bett (2) gesprüht wird.

7. Verfahren nach einem der Ansprüche 4 bis 6, bei dem das gleiche oder ein anderes zusätzliches flüssiges Material aus jeder oder verschiedenen Düsen (10) gesprüht wird.

8. Verfahren nach einem vorhergehenden Anspruch, bei dem das zusätzliche flüssige Material bei einem Gewichtsprozentanteil von weniger als 5% des Materials des inneren Fließbetts auf das Fließbett gesprüht wird.

9. Verfahren nach einem vorhergehenden Anspruch, bei dem das zusätzliche Material eine auf Wasser basierende, Zusätze enthaltende Flüssigkeit und/oder eine auf Öl basierende Flüssigkeit ist, die wahlweise Zusätze enthalten kann.

10. Verfahren nach einem vorhergehenden Anspruch, bei dem das zusätzliche flüssige Material Lezithin enthält, welches vorzugsweise bei einem Gewichtsprozentanteil von weniger als 1% des Materials des inneren Fließbetts (2) auf das Fließbett (2) gesprüht wird.

11. Verfahren nach einem vorhergehenden Anspruch, bei dem das zusätzliche flüssige Material Vitamine aufweist.

12. Sprühtrockner (1) mit einem inneren Fließbett (2), dadurch gekennzeichnet, daß der Trockner (1) Ansatzmittel (10) zum Sprühen von zusätzlichem flüssigem Material aus wenigstens zwei beabstandeten Düsen entlang einer einzigen verlaufenden Speiseleitung auf das innere Fließbett von Pulvermaterial umfaßt.

13. Sprühtrockner nach Anspruch 12, bei dem die Düsen (10) radial und/oder am Umfang beabstandet sind.

14. Sprühtrockner nach Anspruch 12 oder 13, bei dem vier Düsen (10) vorhanden sind, die im wesentlichen gleichmäßig über dem inneren Fließbett (2) des Trockners (1) beabstandet sind.

15. Sprühtrockner nach einem der Ansprüche 12 bis 14, bei dem die Düsen sich bezüglich des Bettbodens auf der gleichen Höhe befinden.

16. Sprühtrockner nach einem der Ansprüche 12 bis 15, bei dem die Düsen sich bezüglich des Bettbodens auf verschiedenen Höhen befinden.

17. Sprühtrockner nach einem der Ansprüche 12 bis 16, bei dem jede Düse bei einer Höhe von wenigstens 500 mm und vorzugsweise ungefähr 600 mm über dem Bettboden angeordnet ist.

## Revendications

1. Procédé pour produire de la poudre de lait comprenant les étapes :
d'atomisation d'un concentré de lait ; et
de séchage du concentré de lait atomisé dans un sécheur (1) ayant un lit fluidisé interne ;
caractérisé en ce que le procédé comporte l'étape de :
pulvérisation d'une matière liquide supplémentaire à partir d'au moins deux buses espacées le long d'une ligne d'alimentation d'extension unique sur le lit fluidisé interne (2) de poudre de lait, lesdites buses espacées étant placées à partir d'une hauteur d'au moins 100 mm au-dessus du haut du lit.

2. Procédé selon la revendication 1, dans lequel la matière liquide supplémentaire est pulvérisée sur le lit fluidisé interne (2) à partir d'une hauteur d'approximativement 200 mm au-dessus du haut du lit (2).

3. Procédé selon l'une quelconque des revendications précédentes, dans lequel le liquide supplémentaire est pulvérisé sur le lit (2) à une hauteur d'au moins 500 mm et de préférence d'approximativement 600 mm au-dessus du fond du lit (2).

4. Procédé selon l'une quelconque des revendications précédentes, dans lequel les buses (10) sont espacées radialement et/ou circonférentiellement.

5. Procédé selon la revendication 5, dans lequel la matière liquide supplémentaire est pulvérisée sur le lit (2) à partir de quatre buses (10) qui sont espacées circonférentiellement d'une même distance par-dessus le lit fluidisé interne (2).

6. Procédé selon la revendication 4, dans lequel la matière liquide supplémentaire est pulvérisée sur le lit (2) à partir d'au moins deux buses (10) qui sont espacées radialement d'une même distance par-dessus le lit.

7. Procédé selon l'une quelconque des revendications 4 à 6, dans lequel la même matière liquide supplémentaire ou une matière liquide supplémentaire différente est pulvérisée à partir de chaque buse ou d'une buse différente (10).

8. Procédé selon l'une quelconque des revendications précédentes, dans lequel la matière liquide supplémentaire est pulvérisée sur le lit fluidisé à un % de poids inférieur à 5% de la matière du lit fluidisé interne.

9. Procédé selon l'une quelconque des revendications précédentes, dans lequel la matière supplémentaire est un liquide à base d'eau contenant des additifs et/ou un liquide à base d'huile qui peut contenir optionnellement des additifs.

10. Procédé selon l'une quelconque des revendications précédentes, dans lequel la matière liquide supplémentaire comporte de la lécithine qui est de préférence pulvérisée sur le lit fluidisé (2) à un % de poids inférieur à 1% de la matière du lit fluidisé interne (2).

11. Procédé selon l'une quelconque des revendications précédentes, dans lequel la matière liquide supplémentaire comprend des vitamines.

12. Sécheur par pulvérisation (1) ayant un lit fluidisé interne (2) caractérisé en ce que le sécheur (1) comporte un moyen d'extension (10) pour pulvériser de la matière liquide supplémentaire à partir d'au moins deux buses espacées le long d'une ligne d'alimentation d'extension unique sur le lit fluidisé interne de matière pulvérulente.

13. Sécheur par pulvérisation selon la revendication 12, dans lequel les buses (10) sont espacées radialement et/ou circonférentiellement.

14. Sécheur par pulvérisation selon la revendication 12 ou 13, dans lequel il existe quatre buses (10) qui sont sensiblement espacées d'une distance égale par-dessus le lit fluidisé interne (2) du sécheur
(1).

15. Sécheur par pulvérisation selon l'une quelconque des revendications 12 à 14, dans lequel les buses se trouvent à la même hauteur par rapport au fond du lit.

16. Sécheur par pulvérisation selon l'une quelconque des revendications 12 à 15, dans lequel les buses se trouvent à des hauteurs différentes par rapport au fond du lit.

17. Sécheur par pulvérisation selon l'une quelconque des revendications 12 à 16, dans lequel chaque buse se trouve à une hauteur d'au moins 500 mm et de préférence à approximativement 600 mm au-dessus du fond du lit.
